# EUROPEAN PATENT SPECIFICATION

(11) **EP 1 913 308 B1**
(45) Date of publication and mention of the grant of the patent: **07.12.2016**
(21) Application number: 06780284.3
(22) Date of filing: 02.08.2006
(51) Int. Cl.: A21B 1/24, F24C 15/16

(54) **A COOKING DEVICE**
KOCHVORRICHTUNG
DISPOSITIF DE CUISSON

(30) Priority: 02.08.2005 TR 200503082
(43) Date of publication of application: 23.04.2008
(73) Proprietor: Arçelik Anonim Sirketi, 34950 Istanbul (TR)
(72) Inventor: AKDAG, Levent Arcelik Anonim Sirketi, Tuzla, 34950 Istanbul (TR); KARATAS, Haluk Arcelik Anonim Sirketi, Tuzla, 34950 Istanbul (TR)
(86) International application number: PCT/IB2006/052649
(87) International publication number: WO 2007/015215

(56) References cited:
- EP-A1- 0 105 931
- DE-A1- 10 054 396
- GB-A- 2 306 217
- US-A- 1 998 944
- US-A- 3 884 213
- US-A- 4 829 158
- US-A- 5 172 682

## Description

The present invention relates to a cooking device comprising a tray providing the cooking of the food items placed in it.

Cooking devices, particularly the domestic ovens, have a capacity of cooking the food items placed in preferably three trays emplaced one above the other. As a result, the cooking chamber wherein the trays are emplaced are equipped with air distribution systems that ensure all the three trays are effectively heated. In this type of ovens (turbo ovens), since the top part of the food items placed in the trays are in direct contact with hot air, they are under a more effective heat transfer compared to the bottom part which is in contact with the tray. Thus, the top and bottom parts of the food items are not cooked evenly.

Furthermore, the fluids within the food items tend to accumulate on the surface contacting the tray due to gravity. Consequently, the bottom part of the food items are cooked later. In conventional turbo ovens, the suction and the distribution of air is accomplished by means of the special structure of the cooking chamber rear wall. However, the greatest heat loss in the cooking chamber is caused by the oven door situated at the front. Therefore, the temperatures are relatively lower at the front parts of the trays located in the cooking chamber. Hence the front part of the food items are cooked slower compared to the rear part.

Furthermore, in these ovens, the trays are rarely used at the same time. In most cases, only one tray is utilized for cooking. This results in unnecessary heating of the unused parts inside the cooking chamber and the one tray cooking performance of the oven to be less than expected.

In the ovens utilized in commercial applications (the impingement type), a homogeneous air distribution is tried to be achieved by blowing hot air to the upper and lower surfaces of the food items from holes in more than one point. However, in order to implement this solution in the domestic ovens, modifications have to be made in the framework design which in turn results in increasing costs.

In the European Patent Application no. 1103182, for effective and fast cooking of the upper and lower surfaces of the food items, the cooking chamber is separated into compartments each suitable for placing one tray. Hot air is circulated through the upper and lower surfaces of these compartments.

The EP 105 931 A1 discloses a cooking device comprising a heater, a fan, a tray, a cooking chamber, a distribution volume, and a rear wall that separates the cooking chamber from the distribution volume. Further, the cooking device comprises a rotatable turntable attached to the bottom of the tray and forming a space between itself and the base of the tray. The US 4829158 discloses a cooking device comprising air distribution plates carrying food supporting racks.

The object of the present invention is to design a cooking device that provides the food items placed in the tray to be cooked in a fast and homogeneous manner.

The cooking device designed to fulfill the objectives of the present invention, explicated in the first and the respective claims, comprises a distribution panel attached to the tray in the cooking chamber. This distribution panel enables those parts of the food items placed in the tray not in contact with the cooking chamber therefore not effectively benefiting from the air circulation in the cooking chamber because of contacting the tray base to be cooked efficiently.

The distribution panel is attached to the tray so as to cover the base of the tray from the bottom. A closed space is created between the tray base and the distribution panel, the upper surface of which is formed by the tray base and the lower surface by the distribution panel. Accordingly, the hot air received from the distribution volume is collected in this closed space and those portions of the food items contacting the tray base are heated effectively.

Hot air is received into the space formed between the tray and the distribution panel by way of an air transmission channel, assembled on the holes formed on the rear wall, one end of which extends to this space and the other end to the distribution volume. The air transmission channel provides the air activated by a fan in the distribution volume to be delivered to the space formed between the tray and the distribution panel before being distributed in the cooking chamber.

The distribution panel can be basically utilized in two different embodiments to lower the energy consumption by reducing heat losses.

In one embodiment of the present invention, the distribution panel is utilized when more than one tray in the cooking chamber is desired to be heated effectively. In this embodiment, by utilizing the distribution panel, the air from the distribution volume is blown onto the tray below the tray with the attached distribution panel situated in the cooking chamber.

In this embodiment, the air blowing process over the tray that is below the tray with the attached distribution panel, is provided by the blowing openings on the distribution panel, positioned according to various combinations. In one embodiment, the blowing openings are positioned uniformly on the distribution panel surface to provide a homogeneous air distribution over the whole surface of the tray. In yet another embodiment, the blowing openings are only formed on the part of the distribution panel corresponding to the front part of the tray, taking into consideration the relatively slower cooking of the food items on the tray that are closer to the cooking device door where heat loss is the greatest. Accordingly, the hot air delivered from the distribution volume is directed only to the slow cooking part of the tray, providing the whole surface of the tray to be heated homogeneously, thus cooking of the food items homogeneously.

In these embodiments wherein blowing openings are utilized, deflectors are situated on each blowing opening, disposed opposite to the direction of the air flow in order to ensure that almost all the air received from the distribution volume is blown from all the openings situated on the distribution panel.

In yet another embodiment of the present invention, the distribution panel is utilized for efficient heating of only one tray situated in the cooking chamber.

In this embodiment of the present invention, by means of the distribution panel, the hot air delivered from the distribution volume is blown over the tray with the distribution panel attached. When only one tray is desired to be heated in the cooking chamber, the air heated in the distribution volume is only directed over and under the tray to be heated instead of being dispersed to the entirety of the cooking chamber, providing the food items in the tray to be cooked both homogeneously and in the shortest period of time.

In another embodiment of the present invention, the flow rate and the direction of the air received from the distribution volume can be controlled. Consequently the air passing from both the blowing openings and the deflector can be utilized effectively.

By way of the present invention, the air received from the distribution volume can be directed to the desired point in the cooking chamber, providing a fast and homogeneous cooking regardless whether there is only one tray or multiple trays in the cooking chamber without making any modifications in the framework of the existing oven. Furthermore in ovens of different models,it is possible to accomplish the above mentioned processes without making any structural modifications on the existing framework of the ovens by utilizing the distribution panel.

The cooking device designed to fulfill the objectives of the present invention is illustrated in the attached figures, where:
Figure 1 - is the top perspective view of a distribution panel comprising blowing openings arranged in more than one row.
Figure 2 - is the bottom perspective view of a distribution panel comprising blowing openings arranged in more than one row.
Figure 3 - is the perspective view of a distribution panel comprising separators and blowing openings arranged in more than one row.
Figure 4 - is the top view of a distribution panel comprising separators and blowing openings arranged in more than one row.
Figure 5 - is the perspective view of a tray and a distribution panel before being attached together.
Figure 6 - is the perspective view of a tray and a distribution panel after being attached together.
Figure 7 - is the bottom perspective view of the tray to which a distribution panel is attached and the other tray situated below.
Figure 8 - is the schematic view of the tray to which a distribution panel is attached and the other tray situated below in the cooking device.
Figure 9 - is the perspective view of a distribution panel comprising blowing openings in another embodiment of the present invention.
Figure 10 - is the bottom perspective view of a distribution panel after it is attached to a tray in another embodiment of the present invention.
Figure 11 - is the schematic view of a tray to which a distribution panel is attached and the tray situated below this tray in the cooking device in another embodiment of the present invention.
Figure 12 - is the perspective view of a distribution panel comprising deflectors in yet another embodiment of the present invention.
Figure 13 - is the perspective view of a tray and the distribution panel before attached to the rear wall.
Figure 14 - is the schematic view of a tray to which the distribution panel is attached and the tray below in the cooking chamber.
Figure 15 - is the perspective view of a distribution panel comprising a deflector in another embodiment of the present invention.

Elements shown in the figures are numbered as follows:
1. Cooking device
2. Cooking chamber
3. Distribution volume
4. Rear wall
5. Tray
6. Distribution panel
7. Transmission channel
8. Blowing opening
9. Deflector
10. Separator
11.Fan
12. Heater

The cooking device (1) of the present invention comprises a heater (12) that heats the air in its vicinity, a fan (11) that activates the heated air, one or more trays (5) that can be arranged one above the other, into which food items to be cooked are placed, a cooking chamber (2) wherein the tray (5) is emplaced, a distribution volume (3) in which the heater (12) and the fan (11) are situated, and a rear wall (4) that separates the cooking chamber (2) from the distribution volume (3), providing the homogeneous distribution of the air in the distribution volume (3) into the cooking chamber (2) and preventing the fan (11) and the heater (12) in the distribution volume (3) from being damaged.

The cooking device (1) comprises a distribution panel (6) that is mounted on the bottom of the tray (5), covering the base of the tray (5), forming a space between itself and the base of the tray (5), providing the flow of the air received from the distribution volume (3) in the space between itself and the tray (5), and heating the base of the tray (5) to which it is attached, by means of the hot air contacting the base of the tray (5).

The cooking device (1) comprises a transmission channel (7), one end of which extends into the distribution volume (3) and the other end into the space between the tray (5) and the air distribution panel (6), that provides some of the air in the distribution volume (3) activated by means of the fan (11) to be transmitted to the distribution panel (6) before being dispersed in the cooking chamber (2).

The transmission channel (7) is situated preferably on the distribution panel (6) and the rear wall (4) comprises one or more holes into which the transmission channel (7) is fitted. The transmission channel (7) is mounted in these holes in a leak-proof way, preventing the air received from the distribution volume (3) from reaching the cooking chamber (2) directly, by using a sealant element such as a gasket.

The distribution panel (6) comprises one or more blowing openings (8) by means of which the space between the tray (5) and the distribution panel (6) opens into the cooking chamber (2), providing the hot air received from the distribution volume (3) into the space between the tray (5) and the distribution panel (6) to be blown over the trays (5) in the cooking chamber (2).

In this preferred embodiment of the present invention, the features of which are explicated above, the air heated by the heater (12) in the distribution volume (3) and activated by the fan (11) reaches to the space between the tray (5) and the distribution panel (6) by passing through the transmission channel (7) fixed on the rear wall (4). The hot air between the tray (5) and the distribution panel (6) heats the base of the tray (5) to which the distribution panel (6) is attached and also enables the heating of the other trays (5) in the cooking chamber (2) by being blown through the blowing openings (8) on the distribution panel (6).

By way of the present invention, the hot air in the distribution volume (3) is utilized in heating the upper and lower surfaces of the tray (5) to which the distribution panel (6) is attached and in heating the other trays (5) in the cooking chamber (2). Consequently, the hot air in the distribution volume (3) is being utilized efficiently to enable the homogeneous and fast cooking of the food on the tray (5) or trays (5) emplaced in the cooking chamber (2).

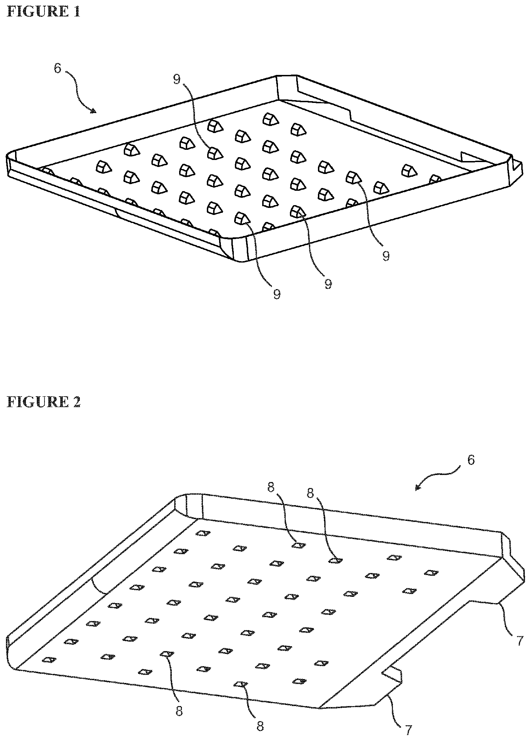

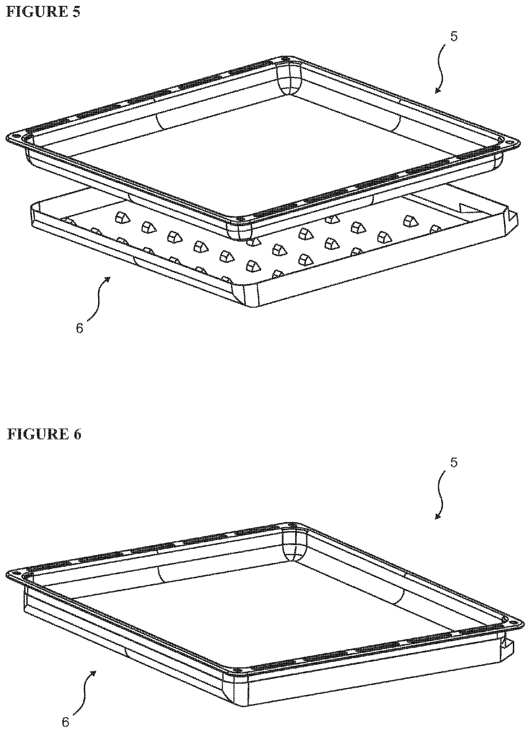

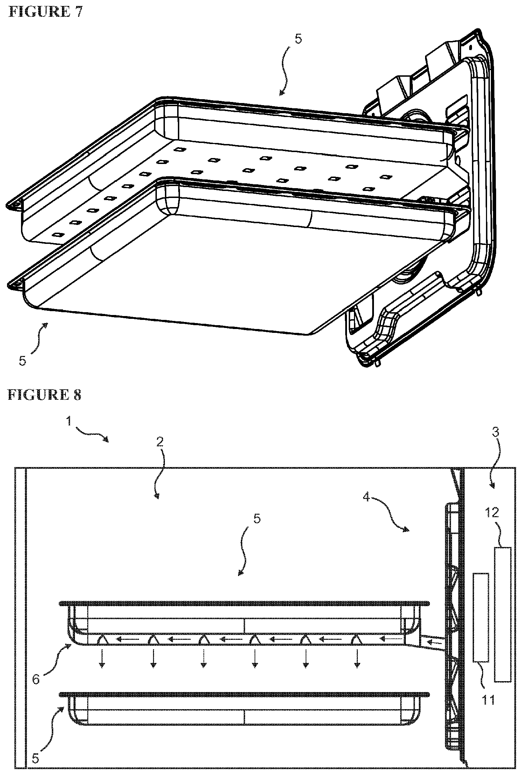

In one embodiment of the present invention, the blowing openings (8) are formed all over the distribution panel (6) so that a homogeneous blowing can be provided on the upper surface of the tray (5) that is below the tray (5) to which the distribution panel (6) is attached. These openings (8) are arranged in regular rows on the distribution panel (6) in order to ensure a homogeneous blowing. The blowing openings (8) of each row are arranged so that they are not at the same level with the blowing openings (8) on the other rows. Hence, from all the blowing openings (8) on the distribution panel (6) an almost equal amount of air is blown to the upper surface of the tray (5) that is below the tray (5) to which the distribution panel (6) is attached. In this embodiment of the present invention, the distribution panel (6) comprises one or more deflectors (9) situated on each blowing opening (8), being opposite to the direction of the air flow, making a protrusion towards the space between the tray (5) and the distribution panel (6), so that the air in the space between the tray (5) and the distribution panel (6) is blown from almost all the blowing openings (8) and to provide the air in the space between the tray (5) and the distribution panel (6) to be blown in the desired direction (Figure 1, Figure 2, Figure 5, Figure 6, Figure 7 and Figure 8).

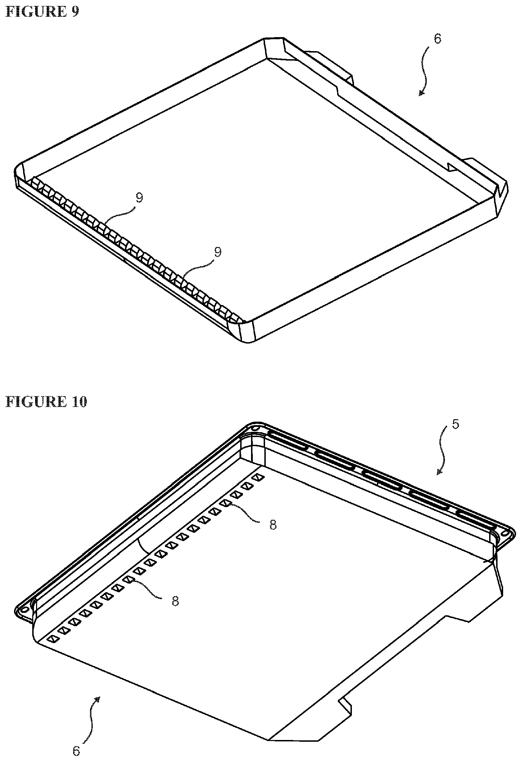

In another embodiment of the present invention, taking into consideration the front part of the tray (5) that is below the tray (5) to which the distribution panel (6) is attached is heated less compared to the other parts, preferably a single row of blowing openings (8) are formed on the distribution panel (6) that correspond to only the front part of the tray (5) that is below the tray (5) to which the distribution panel (6) is attached. Consequently, a uniform cooking process is provided for all parts of the tray (5) that is below the tray (5) to which distribution panel (6) is attached. In this embodiment of the present invention, the distribution panel (6) comprises one or more deflectors (9) situated on each blowing opening (8), being opposite to the direction of the air flow, making a protrusion towards the space between the tray (5) and the distribution panel (6), providing the air in the space between the tray (5) and the distribution panel (6) to be blown in the desired direction (Figure 9, Figure 10, and Figure 11).

In yet another embodiment of the present invention, the distribution panel (6) comprises a deflector (9) that provides to convey the hot air delivered from the distribution volume (3) over the tray (5) by bending towards the tray (5) that it is attached to when it is desired to heat only one tray (5). In this embodiment of the present invention, the blowing opening (8) is situated between the distribution panel (6) and the side of the tray (5).

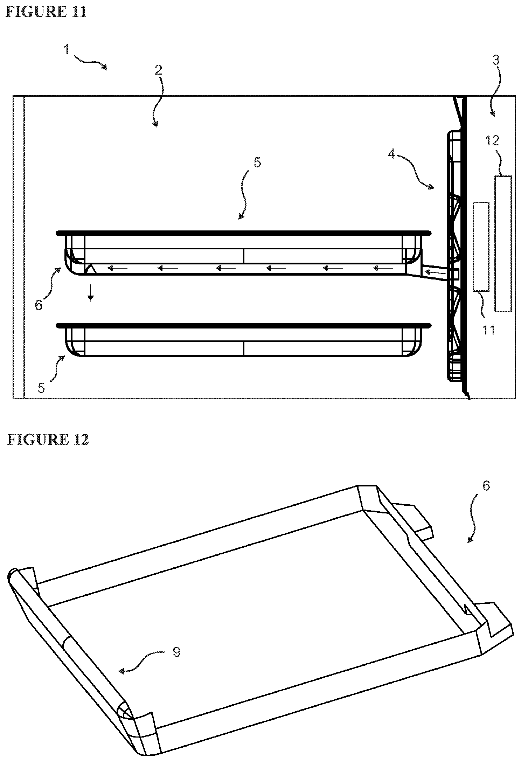

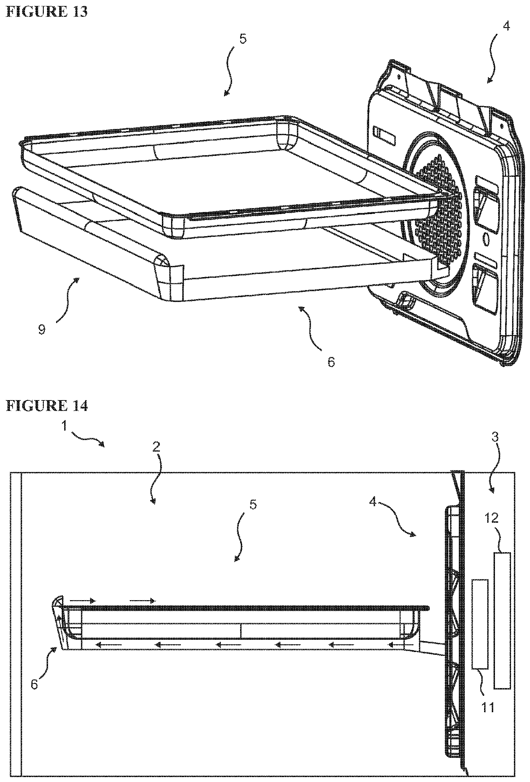

In this embodiment of the present invention, the front wall of the tray (5) and the distribution panel (6) do not contact, thereby forming a blowing opening (8) like a channel that provides the air received from the distribution volume (3) to pass between the front wall of the tray (5) and the distribution panel (6) reaching the cooking chamber (2). The end of the distribution panel (6) forming one side of this channel is bended towards the top of the tray (5) to which the distribution panel (6) is attached. The air received from the distribution volume (3) is prevented from being directly dispersed into the cooking chamber (2) and to sweep past the food items on the tray (5) and to be sucked by the fan (11) due to this structure of the deflector (9) being bendable over the tray (5) (Figure 12, Figure 13 and Figure 14).

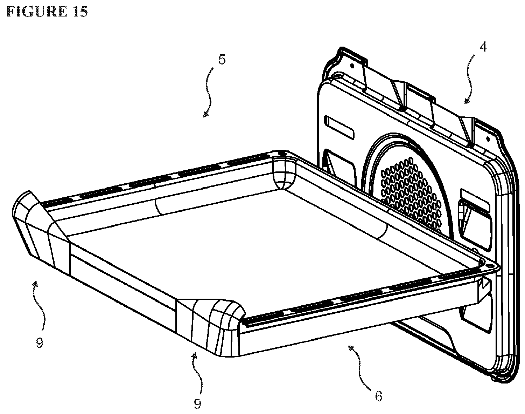

The deflector (9) can extend along the front side of the tray (5) or can be formed by bending over the tray (5) at the front corners of the tray (5) (Figure 15).

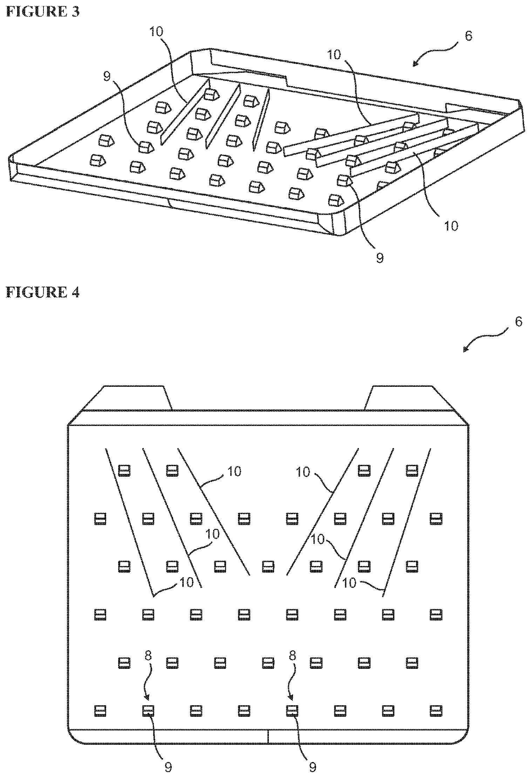

In another embodiment of the present invention, the distribution panel (6) comprises one or more separators (10) fixed on the distribution panel (6), which changes the speed and direction of the air received from the distribution volume (3). The separators (10) provide blowing an equal amount of air from all the blowing openings (8) on the distribution panel (6) thus providing a homogeneous air distribution over the tray (5) that is below the tray (5) to which the distribution panel (6) is attached. Furthermore the separators (10) help in directing an equal amount of air all along the side wherein the deflector (9) is situated (Figure 3 and Figure 4).

The distribution panel (6) is utilized as an element integrated with the tray (5). The distribution panel (6) can be produced as a single piece with the tray (5) or can be produced separate from the tray (5).

By way of the present invention, a fast and homogeneous cooking can be accomplished whether there is only one tray (5) or a multitude of trays (5) in the cooking chamber (2), by directing the air received from the distribution volume (3) to the desired point in the cooking chamber (2), without making any structural modifications on the framework of the existing ovens. Furthermore in ovens of different models, by utilizing the distribution panel (6) it is possible to accomplish the above mentioned processes without making any structural modifications on the existing frameworks of the ovens.

## Claims

1. A cooking device (1) comprising a heater (12) that heats the air in its vicinity, a fan (11) that activates the heated air, one or more trays (5) that can be arranged one above the other, into which food items to be cooked are placed, a cooking chamber (2) wherein the tray (5) is emplaced, a distribution volume (3) in which the heater (12) and the fan (11) are situated, and a rear wall (4) that separates the cooking chamber (2) from the distribution volume (3), providing the homogeneous distribution of the air in the distribution volume (3) into the cooking chamber (2) and preventing the fan (11) and the heater (12) in the distribution volume (3) from being harmed and **characterized by** a distribution panel (6) that is attached to the bottom of the tray (5) wherein the distribution panel (6) is utilized as an element integrated with the tray (5), covering the base of the tray (5), forming a space between itself and the base of the tray (5), providing the flow of the air received from the distribution volume (3) in the space between itself and the tray (5), and heating the base of the tray (5) that it is attached, by means of hot air contacting the base of the tray (5).

2. A cooking device (1) as in Claim 1, **characterized by** a distribution panel (6) comprising one or more blowing openings (8), by means of which the space between the tray (5) and the distribution panel (6) opens into the cooking chamber (2), providing hot air received from the distribution volume (3) into the space between the tray (5) and the distribution panel (6) to be blown over the tray (5) that it is attached or over the other trays (5) in the cooking chamber (2).

3. A cooking device (1) as in Claim 2, **characterized by** a distribution panel (6) comprising a blowing opening (8), that provides the air received from the distribution volume (3) to be blown over the tray (5) that is below the tray (5) that it is attached.

4. A cooking device (1) as in Claim 2 or 3, **characterized by** a distribution panel (6) comprising blowing openings (8) in a single row in the section corresponding to the front part the tray (5) that is below the tray (5) that it is attached to.

5. A cooking device (1) as in any one of the above claims, **characterized by** a distribution panel (6) comprising one or more deflectors (9) situated on each blowing opening (8), being opposite the direction of the air flow, providing the air in the space between the tray (5) and the distribution panel (6) to be blown in the desired direction.

6. A cooking device (1) as in Claim 5, **characterized by** a distribution panel (6) comprising a deflector (9) positioned so as to make a protrusion towards the space between the tray (5) and the distribution panel (6).

7. A cooking device (1) as in Claim 5, **characterized by** a distribution panel (6) comprising a deflector (9) that provides to convey the air delivered from the distribution volume (3) over the tray (5) by bending towards the tray (5) that it is attached to.

8. A cooking device (1) as in Claim 5, **characterized by** a distribution panel (6) comprising a deflector (9) that extends along the front side of the tray (5).

9. A cooking device (1) as in Claim 5, **characterized by** a distribution panel (6) comprising a deflector (9) situated at the front corners of the tray (5).

10. A cooking device (1) as in any one of the above claims, **characterized by** a transmission channel (7), one end of which extends into the distribution volume (3) and the other end into the space between the tray (5) and the air distribution panel (6), that provides some of the air activated by means of the fan (11) in the distribution volume (3) to be transmitted to the distribution panel (6) before being dispersed in the cooking chamber (2).

11. A cooking device (1) as in any one of the above claims, **characterized by** a distribution panel (6) comprising one or more separators (10) that act upon the flow rate and direction of the air received from the distribution volume (3).

## Patentansprüche

1. Kochvorrichtung (1), umfassend eine Heizeinrichtung (12), die die Luft in ihrer Nähe erwärmt, ein Gebläse (11), das die erwärmte Luft aktiviert, ein oder mehrere Tragebleche (5), die sich übereinander anordnen lassen und auf denen zuzubereitende Lebensmittel abgelegt werden, eine Garungskammer (2), in die das Trageblech (5) gesetzt wird, ein Verteilungsvolumen (3), in dem die Heizeinrichtung (12) und das Gebläse (11) angeordnet sind, und eine Rückwand (4), die die Garungskammer (2) von dem Verteilungsvolumen (3) trennt und für die homogene Verteilung der Luft im Verteilungsvolumen (3) in die Garungskammer (2) sorgt und verhindert, dass das Gebläse (11) und die Heizeinrichtung (12) im Verteilungsvolumen (3) beschädigt werden, und
**gekennzeichnet durch** eine Verteilungsplatte (6), die am Boden des Trageblechs (5) angebracht ist, wobei die Verteilungsplatte (6) als ein in das Trageblech (5) integriertes Element benutzt wird, das die Basis des Trageblechs (5) abdeckt und einen Raum zwischen sich und der Basis des Trageblechs (5) bildet und die Strömung der Luft aus dem Verteilungsvolumen (3) in dem Raum zwischen sich selbst und dem Trageblech (5) ermöglicht und die Basis des angebrachten Trageblechs (5) **durch** Kontakt mit der Basis des Trageblechs (5) erwärmt.

2. Kochvorrichtung (1) nach Anspruch 1, **dadurch gekennzeichnet, dass** eine Verteilungsplatte (6) eine oder mehrere Blasöffnungen (8) umfasst, über die sich der Raum zwischen dem Trageblech (5) und der Verteilungsplatte (6) sich in die Garungskammer (2) öffnet und es ermöglicht, dass heiße Luft aus dem Verteilungsvolumen (3) in den Raum zwischen dem Trageblech (5) und dem Verteilungsplatte (6) über das angebrachte Trageblech (5) oder über die anderen Tragebleche (5) in der Garungskammer (2) geblasen wird.

3. Kochvorrichtung (1) nach Anspruch 2, **dadurch gekennzeichnet, dass** eine Verteilungsplatte (6) eine Blasöffnung (8) umfasst, die es ermöglicht, dass die Luft von dem Verteilungsvolumen (3) über das Trageblech (5) unterhalb des angebrachten Trageblechs (5) geblasen wird.

4. Kochvorrichtung (1) nach Anspruch 2 oder 3, **dadurch gekennzeichnet, dass** eine Verteilungsplatte (6) Blasöffnungen (8) in einer einzelnen Reihe in dem Abschnitt umfasst, der dem vorderen Teil des Trageblechs (5) entspricht, das unterhalb des angebrachten Trageblechs (5) liegt.

5. Kochvorrichtung (1) nach einem der vorangehenden Ansprüche, **dadurch gekennzeichnet, dass** eine Verteilungsplatte (6) eine oder mehrere Ablenkplatten (9) umfasst, die an jeder Blasöffnung (8) angeordnet sind und der Richtung des Luftstroms entgegengesetzt sind und es ermöglichen, dass die Luft in dem Raum zwischen dem Trageblech (5) und der Verteilungsplatte (6) in die gewünschte Richtung geblasen wird.

6. Kochvorrichtung (1) nach Anspruch 5, **dadurch gekennzeichnet, dass** eine Verteilungsplatte (6) eine Ablenkplatte (9) umfasst, die derart angeordnet ist, dass sie einen Vorsprung zum Raum zwischen dem Trageblech (5) und der Verteilungsplatte (6) bildet.

7. Kochvorrichtung (1) nach Anspruch 5, **dadurch gekennzeichnet, dass** eine Verteilungsplatte (6) eine Ablenkplatte (9) umfasst, die es ermöglicht, dass die Luft aus dem Verteilungsvolumen (3) über das Trageblech (5) geleitet wird, indem sie sich über das Trageblech (5) biegt, an dem sie angebracht ist.

8. Kochvorrichtung (1) nach Anspruch 5, **dadurch gekennzeichnet, dass** eine Verteilungsplatte (6) eine Ablenkplatte (9) umfasst, die sich an einer Vorderseite des Trageblechs (5) erstreckt.

9. Kochvorrichtung (1) nach Anspruch 5, **dadurch gekennzeichnet, dass** eine Verteilungsplatte (6) eine Ablenkplatte (9) umfasst, die an den vorderen Ecken des Trageblechs (5) angeordnet ist.

10. Kochvorrichtung (1) nach einem der vorangehenden Ansprüche, **gekennzeichnet durch** einen Übertragungskanal (7), dessen eines Ende sich in das Verteilungsvolumen (3) und dessen anderes Ende in den Raum zwischen dem Trageblech (5) und der Luftverteilungsplatte (6) erstreckt und der es ermöglicht, dass ein Teil der vom Gebläse (11) im Verteilungsvolumen (3) aktivierten Luft an die Verteilungsplatte (6) übertragen wird, bevor sie in der Garungskammer (2) verteilt wird.

11. Kochvonichtung (1) nach einem der vorangehenden Ansprüche, **dadurch gekennzeichnet, dass** eine Verteilungsplatte (6) eine oder mehrere Trennvorrichtungen (10) umfasst, die auf die Strömungsrate und Richtung der Luft aus dem Verteilungsvolumen (3) einwirken.

## Revendications

1. Un dispositif de cuisson (1) comprenant un dispositif de chauffage (12) qui chauffe l'air dans son voisinage, un ventilateur (11) qui remue l'air chauffé, une ou plusieurs plaques (5) qui peuvent être arrangées l'une au-dessus de l'autre, dans lesquelles les aliments à cuire sont placés, une chambre de cuisson (2) dans laquelle la plaque (5) est placée, un volume de distribution (3) dans lequel le dispositif de chauffage (12) et le ventilateur (11) sont disposés, et une paroi arrière (4) qui sépare la chambre de cuisson (2) et le volume de distribution (3), qui permet la distribution homogène de l'air dans le volume de distribution (3) dans la chambre de cuisson (2) et qui empêche le ventilateur (11) et le dispositif de chauffage (12) dans le volume de distribution (3) d'être endommagés, et
**caractérisé par** un panneau de distribution (6) qui est fixé au fond de la plaque (5), où le panneau de distribution (6) est utilisé comme un élément intégré à la plaque (5), qui recouvre la base de la plaque (5), qui forme un espace entre lui-même et la base de la plaque (5), qui permet l'écoulement de l'air reçu à partir du volume de distribution (3) dans l'espace entre lui-même et la plaque (5) et qui chauffe la base de la plaque (5) à laquelle il est fixé, par l'intermédiaire de l'air chaud en contact avec la base de la plaque (5).

2. Un dispositif de cuisson (1) selon la Revendication 1, **caractérisé par** un panneau de distribution (6) comprenant une ou plusieurs ouverture de soufflage (8) par lesquelles l'espace entre la plaque (5) et le panneau de distribution (6) s'ouvre dans la chambre de cuisson (2), qui permettent à l'air chaud reçu à partir du volume de distribution (3) dans l'espace entre le plaque (5) et le panneau de distribution (6) d'être soufflé sur la plaque (5) à laquelle il est fixé ou sur les autres plaques (5) dans la chambre de cuisson (2).

3. Un dispositif de cuisson (1) selon la Revendication 2, **caractérisé par** un panneau de distribution (6) comprenant une ouverture de soufflage (8) qui permet à l'air reçu à partir du volume de distribution (3) d'être soufflé sur la plaque (5) qui est au-dessous de la plaque (5) à laquelle il est fixé.

4. Un dispositif de cuisson (1) selon la Revendication 2 ou 3, **caractérisé par** un panneau de distribution (6) comprenant des ouvertures de soufflage (8) dans une seule rangée dans la partie correspondant à la partie avant de la plaque (5) qui est au-dessous de la plaque (5) à laquelle il est fixé.

5. Un dispositif de cuisson (1) selon l'une quelconque des revendications précédentes, **caractérisé par** un panneau de distribution (6) comprenant un ou plusieurs déflecteurs (9) disposés sur chaque ouverture de soufflage (8) de manière opposée à la direction de l'écoulement d'air, qui permettent à l'air dans l'espace entre la plaque (5) et le panneau de distribution (6) d'être soufflé dans la direction désirée.

6. Un dispositif de cuisson (1) selon la Revendication 5, **caractérisé par** un panneau de distribution (6) comprenant un déflecteur (9) qui est positionné de manière à faire saillie vers l'espace enter la plaque (5) et le panneau de distribution (6).

7. Un dispositif de cuisson (1) selon la Revendication 5, **caractérisé par** un panneau de distribution (6) comprenant un déflecteur (9) qui permet le transfert de l'air reçu à partir du volume de distribution (3) sur la plaque (5) en se pliant vers la plaque (5) à laquelle il est fixé.

8. Un dispositif de cuisson (1) selon la Revendication 5, **caractérisé par** un panneau de distribution (6) comprenant un déflecteur (9) qui s'étend le long du côté avant de la plaque (5).

9. Un dispositif de cuisson (1) selon la Revendication 5, **caractérisé par** un panneau de distribution (6) comprenant un déflecteur (9) qui est disposé aux coins avant de la plaque (5).

10. Un dispositif de cuisson (1) selon l'une quelconque des revendications précédents, **caractérisé par** un canal de transmission (7) dont une extrémité s'étend dans le volume de distribution (3) et l'autre extrémité dans l'espace entre la plaque (5) et le panneau de distribution d'air (6), qui permet à une partie de l'air remue par l'intermédiaire du ventilateur (11) dans le volume de distribution (3) d'être transmise au panneau de distribution (6) avant d'être dispersé dans la chambre de cuisson (2).

11. Un dispositif de cuisson (1) selon l'une quelconque des revendications précédents, **caractérisé par** un panneau de distribution (6) comprenant un ou plusieurs séparateurs (10) qui agissent sur le débit et la direction de l'air reçu à partir du volume de distribution (3).
